# EUROPEAN PATENT APPLICATION

(11) **EP 2 453 149 A1**
(43) Date of publication of application: **16.05.2012**
(21) Application number: 10191144.4
(22) Date of filing: 15.11.2010
(51) Int. Cl.: F16H 61/24, F16H 61/36, F16H 63/20

(54) **Shifter inertia in manual gearbox**

(71) Applicant: Vicura AB, 461 38 Trollhättan (SE)
(72) Inventor: Mohlin, Mikael, 442 32, KUNGÄLV (SE); Björck, Per-Gunnar, 461 53, TROLLHÄTTAN (SE); Edlundh, Ulrik, 465 31, NOSSEBRO (SE)
(74) Representative: Haag, Malina Anna

(57) **Abstract**

A shifter mechanism for a manual gearbox of a vehicle comprises a shift arm (3), a shifter axle (2), and a mass element (4). The shift arm (3) is arranged to actuate the shifter axle (2) for shifting gears. The mass element (4) is connected to the shift arm (3) and the shifter axle (2) via a planetary gear set (5).

## Description

### Technical Field of the Invention

The present invention relates to a shifter mechanism for a manual gearbox of a vehicle, comprising a shift arm, a shifter axle, and a mass element, the shift arm being arranged to actuate the shifter axle for shifting gears.

### Background Art

In manual gearboxes for vehicles, gears are shifted and selected using a gear shift lever. When shifting gears, vibrations are generated, which impair shift quality. Particularly, the gear shift lever may vibrate such that the comfort of the driver is reduced.

One solution to this problem that is in use today is to introduce inertia or mass elements in the shifting system. This reduces the transfer of high frequency vibrations from the engine into the shifting system, and particularly into the gear shift lever. A drawback of this solution is that the inertia or mass that can be added is limited by the space available. Further, the added mass also adds to the total mass of the vehicle. Therefore, shifting systems have been developed in which the inertia element is connected to the gear shift lever via links, giving the mass element a motion ratio larger than one. In this way, a desired inertia is achievable with a smaller added mass element. However, it is difficult to design the links to achieve a constant motion ratio in all angular positions of the gear shift lever. Vibrations from the engine, e.g., a combustion engine, tend to transfer into the shifting system, making the gear shift lever vibrate. By making the added mass element symmetric about the shifter axle, no such vibrations in a rotational direction can be transferred into the gear shift lever.

Thus, there still exists a need for shifter mechanisms which afford good shift quality.

### Summary of the Invention

An objective of the present invention is to provide a shifter mechanism which solves the problems mentioned above. A particular objective of the invention is to provide a shifter mechanism in which a sufficient inertia is arranged and which may be built in in a limited space.

These objectives are achieved, in full or at least partially, by means of a shifter mechanism as claimed in claim 1. Preferred embodiments are defined in the dependent claims.

The shifter mechanism of the invention is characterised in that the mass element is connected to the shift arm and the shifter axle via a planetary gear set. This makes it possible to achieve a rotational motion ratio of more than one between the shift arm and the mass element. The use of a planetary gear set also makes it possible to keep the motion ratio constant.

The mass element may be fixedly connected to a sun gear of the planetary gear set. This makes it possible to achieve a particularly large rotational motion ratio between the shift arm and the mass element.

In a particularly practical embodiment, the mass element may be integrally formed with an axle of the sun gear. Thereby, the number of parts in the shifter mechanism may be reduced and the number of steps in the mounting operation may be reduced.

In one embodiment, the shifter axle may be fixedly connected to a planet carrier of the planetary gear set. Depending on how other parts of the shifter mechanism are mounted, this makes it possible to achieve a large rotational motion ratio between the shift arm and the mass element.

The shift arm may be fixedly connected to a planet carrier of the planetary gear set. This also makes it possible to achieve a large rotational motion ratio, depending on the mounting arrangement of other parts of the shifter mechanism.

The gear ratio of the planetary gear set is advantageously such that a rotational motion ratio between the shift arm and the mass element is in the range of 1:2 to 1:5, preferably 1:3 to 1:4.

In one embodiment, the shifter mechanism may comprise a gear shift lever connected to the shift arm, said gear shift lever being arranged to actuate the shifter axle, via the shift arm, for switching gears. This is a practical way of arranging a shifter mechanism.

The shifter mechanism may further comprise a sleeve surrounding the shifter axle, said sleeve allowing relative movement of the shifter axle and the sleeve in a longitudinal direction of the shifter axle, wherein the sleeve is connected to the gear shift lever and the gear shift lever is arranged to actuate the sleeve for selecting gear. With such an arrangement, it is possible to select gear without influence from the mass element.

Other objectives, features and advantages of the present invention will appear from the following detailed disclosure, from the attached claims, as well as from the drawings. It is noted that the invention relates to all possible combinations of features.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### Brief Description of the Drawings

The invention will be described in more detail with reference to the appended schematic drawings, which show an example of a presently preferred embodiment of the invention.
Fig. 1 is a cross-sectional view of part of a shifter mechanism according to an embodiment.
Fig. 2 is a perspective view from above of the shifter mechanism of Fig. 1.

### Detailed Description of Preferred Embodiments of the Invention

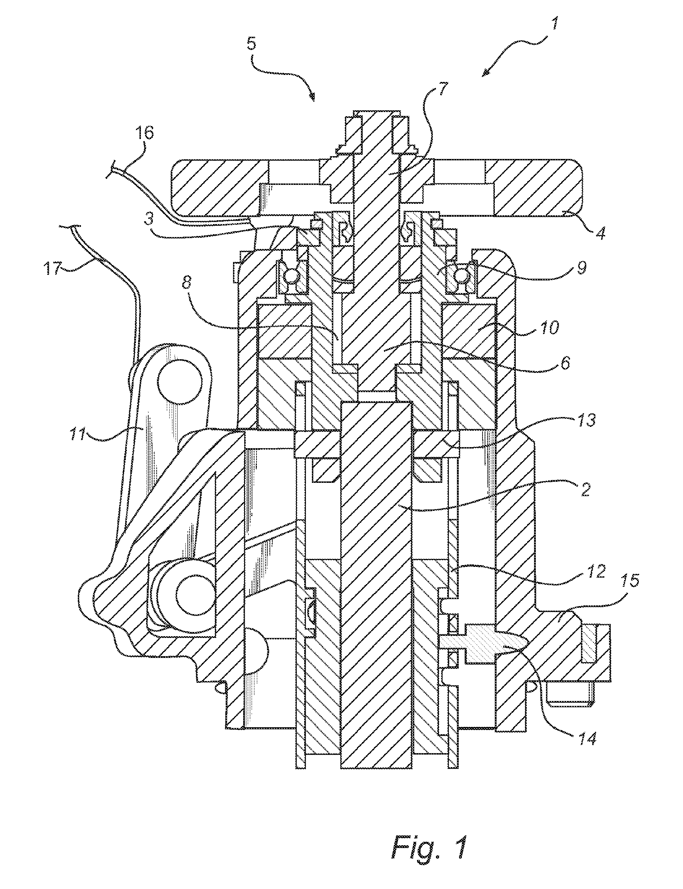

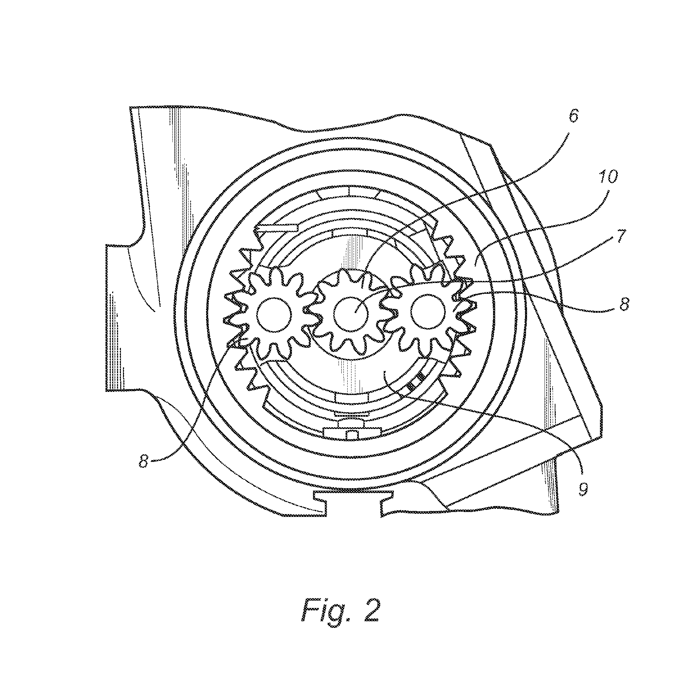

In Fig. 1 a shifter mechanism 1 for use in a vehicle, such as a car, is shown. The shifter mechanism 1 has a shifter axle 2 which is connected to the actual gearbox (not shown) and a shift arm 3, to which a gear shift lever (not shown) is connected via a first wire 16. A mass element 4 is connected to the shifter axle 2 and the shift arm 3 via a planetary gear set 5. The mass element 4 is fixedly connected to a sun gear 6 of the planetary gear set, or more specifically to an axle 7 of the sun gear 6. The planetary gear set 5 further has two planet gears 8 (more clearly shown in Fig. 2) arranged on a planet carrier 9, and a ring gear 10. The shift arm 3 is fixedly connected to the planet carrier 9. At an upper end, the shifter axle 2 is also fixedly connected to the planet carrier 9. At the end of the shifter axle 2 not shown in Fig. 1 (i.e. below Fig. 1), the shifter axle 2 is mounted in a bearing in the gear housing 15. A second wire 17 from the gear shift lever is connected to a link 11. The link 11 is in turn connected to a sleeve 12 surrounding the shifter axle 2. A first pin 13 connects the shifter axle 2 to the planet carrier 9 and a second pin 14 connects the sleeve to the gear housing 15.

When the gear shift lever is manoeuvred for shifting gears, the shift arm 3 causes the planet carrier 9 to rotate. Thereby, the planets 8 will rotate, causing the sun gear 6 to rotate in an opposite direction. Since the mass element 4 is fixedly connected to the axle 7 of the sun gear 6, there is a certain inertia to overcome when manoeuvring the gear shift lever. This inertia improves the shift quality. Vibrations that are generated when the gear shift lever is manoeuvred are dampened by this inertia, thereby improving the comfort of the driver.

When the gear shift lever is manoeuvred to select gear, the second wire 17 from the gear shift lever operates the link 11, thereby causing the sleeve 12 to move in a translational movement in a longitudinal direction of the sleeve 12 and the shifter axle 2. This movement of the sleeve 12 causes a shift fork (not shown) to engage a gear. The second pin 14 that slidingly connects the sleeve to the gear housing reduces play in the movement of the sleeve. The movement of the sleeve is essentially not impacted by the mass element 4 and therefore selecting gear can be done without having to overcome the inertia of the mass element 4.

The fact that the mass element 4 is connected to the shifter axle 2 and the shift arm 3 via the planetary gear 5 makes it possible to create a rotational motion ratio between the shift arm 3 and the mass element which is larger than 1. This, in turn, makes it possible to use a smaller mass element for achieving a certain inertia. With a proper choice of teeth of the gears of the planetary gear set 5 a motion ratio in the range of 1:3 to 1:4 may advantageously be achieved.

The skilled person realises that a number of modifications of the embodiments described herein are possible without departing from the scope of the invention, which is defined in the appended claims.

For instance,in the embodiment shown, the mass element 4 is manufactured separately and attached to the axle 7 of the sun gear. However, the mass element may also be integrally formed with the sun gear axle.

In the description above, the motion ratio between the shift arm 3 and the mass element is in the range of 1:3 to 1:4. However, it may in some case be advantageous to use a motion ratio as low as 1:2 or as high as 1:5.

Further, it would be possible to connect the shift arm, shifter axle and mass element to other parts of the planetary gear. For instance, the mass element could be fixedly connected to the ring gear, and the shift arm and shifter axle could be fixedly connected to the sun gear. Alternatively, the mass element could be fixedly connected to the ring gear, and the shift arm and shifter axle could be fixedly connected to the planet carrier.

The number of planet gears could in theory be just one, but is preferably two or more.

## Claims

1. A shifter mechanism for a manual gearbox of a vehicle, comprising:
a shift arm (3),
a shifter axle (2), and
a mass element (4),
the shift arm (3) being arranged to actuate the shifter axle (2) for shifting gears,
**characterised in that** the mass element (4) is connected to the shift arm (3) and the shifter axle (2) via a planetary gear set (5).

2. A shifter mechanism as claimed in claim 1, wherein the mass element (4) is fixedly connected to a sun gear (6) of the planetary gear set (5).

3. A shifter mechanism as claimed in claim 2, wherein the mass element (4) is integrally formed with an axle (7) of the sun gear (6).

4. A shifter mechanism as claimed in any one of the preceding claims, wherein the shifter axle (2) is fixedly connected to a planet carrier (9) of the planetary gear set (5).

5. A shifter mechanism as claimed in any one of the preceding claims, wherein the shift arm (3) is fixedly connected to a planet carrier (9) of the planetary gear set (5).

6. A shifter mechanism as claimed in any one of the preceding claims, wherein the gear ratio of the planetary gear set (5) is such that a rotational motion ratio between the shift arm and the mass element is in the range of 1:2 to 1:5, preferably 1:3 to 1:4.

7. A shifter mechanism as claimed in any one the preceding claims, further comprising a gear shift lever connected to the shift arm (3), said gear shift lever being arranged to actuate the shifter axle (2), via the shift arm (3), for switching gears.

8. A shifter mechanism as claimed in claim 7, further comprising a sleeve (12) surrounding the shifter axle (2), said sleeve (12) allowing relative movement of the shifter axle (2) and the sleeve (12) in a longitudinal direction of the shifter axle (2), wherein the sleeve (12) is connected to the gear shift lever and the gear shift lever is arranged to actuate the sleeve (12) for selecting gear.
